Europäisches Patentamt

European Patent Office

Office européen des brevets

(19)

(11) Publication number: **0 394 831**

**A2**

(12) # EUROPEAN PATENT APPLICATION

(21) Application number: **90107397.3**

(51) Int. Cl.5: **B27M 3/00**

(22) Date of filing: **19.04.90**

(30) Priority: **26.04.89 SE 8901513**

(43) Date of publication of application:
**31.10.90 Bulletin 90/44**

(84) Designated Contracting States:
**DE FR GB IT NL**

(71) Applicant: **ING. FIRMA CHE JOHANSON AB**
**Box 804**
**S-713 25 Nora(SE)**

(72) Inventor: **Birger, Nestor**
**Tomatvägen 18**
**S-710 15 Vintrosa(SE)**

(74) Representative: **Lundquist, Lars-Olof**
**L-O Lundquist Patentbyra Box 80**
**S-651 03 Karlstad(SE)**

(54) **A machine for manufacturing objects out of wood.**

(57) A machine for manufacturing preferably loading pallets in two steps, comprising a feeding station (1), a nailing station (2) and a plurality of conveyors (3, 4, 5) for transporting tables (7) with fixtures supporting partially assembled loading pallets (8), as well as tables with fixtures supporting finished loading pallets (8) from the feeding station to and past the nailing station in a straight, horizontal transfer track which starts at the feeding station (1) and ends close to a delivery station for the receipt of finished loading pallets. According to the invention the machine has a return conveyor (9) for the return of empty fixture tables and fixture tables with partially assembled loading pallets to the feeding station (1), said return conveyor being disposed below said conveyors (3, 4, 5). Furthermore, a vertically movable table (26) is disposed at the end of said transfer track to receive a fixture table moved along the transfer track, said vertically movable table being arranged to be lowered down to the return conveyor for the transfer of a fixture table with a partially assembled and nailed loading pallet or an empty fixture table to the return conveyor. A similar vertically movable table (25) is disposed at the feeding station (1) to receive a fixture table with partially assembled and nailed loading pallet or an empty fixture table and transfer the fixture table to the start of the transfer track, said conveyors (3, 4, 5), said two vertically movable tables (25, 26) and said return conveyor (9)

together forming a closed track for the simultaneous circulation of a plurality of fixture tables.

Fig.1

## A machine for manufacturing objects out of wood

The present invention relates to a machine for manufacturing objects out of wood in two steps, preferably loading pallets and the like, comprising a feeding station, a nailing station, and a plurality of conveyors for transporting tables with fixtures supporting partially assembled loading pallets as well as tables with fixtures supporting finished loading pallets from the feeding station to and past the nailing station in a straight, horizontal transfer track which starts at the feeding station and ends close to a delivery station for the receipt of finished loading pallets.

A problem with known machines of the type described above is that their capacity is relatively low owing to the fact that only one, or at most two loading pallets can be assembled simultaneously. When the parts for one side and the body of a loading pallet have been placed in a fixture of a fixture table, the fixture table with the semi-manufacture is moved to the nailing station and while this semi-manufacture is moved forward, nailed and returned on the same conveyor to the feeding station, the operators will be inactive for long periods of time and can only devote themselves to certain preparations for the next work stage in assembling the loading pallet. On the other hand this second work stage, comprising turning the loading pallet and fitting the remaining parts into the fixture, e.g. the surface boards, must be performed extremely quickly but yet with precision and the nailing station is inactive while this is being done. It will be understood that such a machine has low capacity, but also that the operators are subjected to considerable stress due to being alternately inactive and hyperactive. In the long term this may have an adverse effect on precision, helth, production quality, etc. Making the machine longer is not a practical solution since, inter alia, this would require substantially twice as much floor space and investment.

The object of the present invention is to eliminate the problem mentioned above in machines of the type described in the introduction, and to substantially increase the capacity of the machine, e.g. by up to 100 %, while at the same time avoiding the alternating inactive and highly active periods of time instead offering a steady and more moderate working pace.

This is achieved according to the invention in that the machine further includes a return conveyor for the return of empty fixture tables and fixture tables with partially assembled loading pallets to the feeding station, said return conveyor being disposed below said plurality of conveyors; that a vertically movable table is disposed at the end of said transfer track to receive a fixture table moved along the transfer track, said vertically movable table being arranged to be lowered down to the return conveyor for the transfer of a fixture table with a partially assembled and nailed loading pallet or an empty fixture table to the return conveyor; and that a similar vertically movable table is disposed att the feeding station to receive a fixture table with partially assembled and nailed loading pallet or an empty fixture table and transfer the fixture table to the start of the transfer track, said plurality of conveyors, said two vertically movable tables and said return conveyor together forming a closed track for the simultaneous circulation of a plurality of fixture tables.

The invention will be described further in the following with reference to the accompanying drawings.

Figure 1 shows a machine according to the invention schematically and in perspective.

Figures 2-5 illustrate the manufacture of loading pallets utilizing two pairs of fixture tables in a machine according to Figure 1.

The invention is particularly suitable for manufacturing loading pallets in series and in two steps, but can of course be used for manufacturing other articles of wood in two steps, said articles being composed of boards and slabs of wood of various kinds.

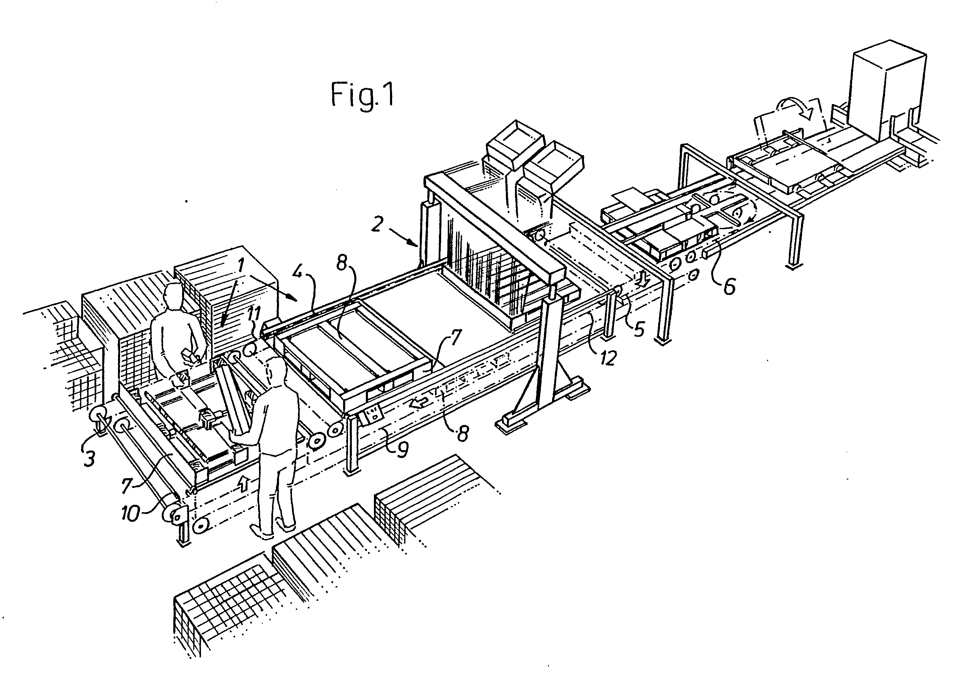

Figure 1 shows schematically a machine for series production in two steps of preferably loading pallets, said machine comprising a feeding station 1 and, spaced therefrom, a nailing station 2. A first conveyor 3 is located at the feeding station 1, followed by a second conveyor 4 extending from said first conveyor 3, through and past the nailing station 2, and a third conveyor 5 located at a distance from the nailing station 2 and extending from the second conveyor 4 to a delivery conveyor 6. All the conveyors 3, 4, 5, 6 are arranged in a straight line.

The machine is equipped with a plurality of movable tables 7 with fixtures in which loading pallets 8 are manufactured in two steps, passing the nailing station 2 twice before being transferred to the delivery conveyor 6.

The machine also includes a return conveyor 9 disposed immediately below the three conveyors 3, 4, 5 with a small space therebetween leaving room for returned fixture tables 7 with or without half-finished loading pallets. The return conveyor 9 thus runs in the opposite direction with respect to the three conveyors 3, 4, 5, and extends from the lower end of the third conveyor 5 to substantially the rear end of the first conveyor 3.

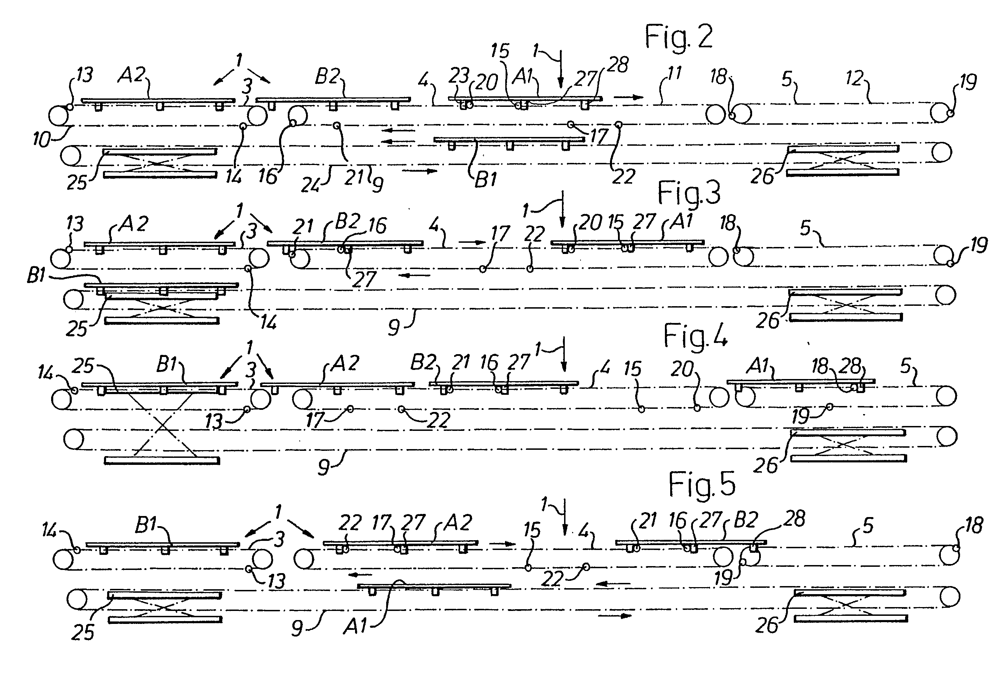

The three conveyors 3, 4, 5 are mounted on stands, and each conveyor consists of two parallel chains 10, 11 and 12, respectively, running at a distance from each other along the sides of the table and around sprockets. As can be seen more clearly in Figure 2, each pair of chains is provided with feeders 13, 14; 15, 16, 17; 18, 19 which are brought into engagement with driving bosses 27, 28 on the lower side of a fixture table 7 when this is to be moved. The chains 11 of the middle conveyor 4 are also provided with counter members 20, 21, 22, disposed to lie immediately before a boss 23 on the fixture table in order to prevent the fixture table from moving forward in relation to the chains and instead to be fixed in its position defined by the feeders and the counter members.

The return conveyor 9 has two parallel conveyor chains 24 which carry along the fixture tables, with or without half-finished loading pallets. The conveyor chains 24 have limited width so that a longitudinal opening is left between them, in which opening a vertically movable table 25, 26 is disposed, both at the feeding station 1 and at the third conveyor 5. The chains 10 of the first conveyor 3 can be opened to provide space for a fixture table so that the fixture table with or without a half-finished loading pallet can be raised with the aid of the vertically movable table 25 which is in a lower starting position. A similar arrangement is to be found in the third conveyor 5, through which a fixture table with or without a half-finished loading pallet can be lowered to the return conveyor 9 with the help of the vertically movable table 26.

Figures 2-5 illustrate the passage of four fixture tables 7 in a circulation track formed by the upper conveyors 3, 4, 5, the underlying return conveyor 9 and the two vertically movable tables 25, 26 located at the ends. The fixture tables are divided into two pairs, A1, B1 and A2, B2, the fixture tables A1, A2 of which being intended for the construction of the upper part or loading surface of the loading pallet, whereas the fixture tables B1, B2 are intended for construction of the lower part of the loading pallet. Each pair of fixture tables A1, B1 and A2, B2, is thus used to construct one and the same loading pallet in two steps. In Figures 2 and 3 the fixture table A1 is in the nailing station 2 for nailing together the upper part (not shown) of a loading pallet, the pieces of which having been placed in the fixture earlier when the fixture table was in the conveyor 3 at the feeding station. The fixture table A1 is then transferred from the nailing station down to the return conveyor 9 via the vertically movable table 26, as illustrated in Figures 4 and 5, to be lifted again to the conveyor 3 and assume the position of the fixture table A2 in Figure 2. The half-finished loading pallet is then lifted, turned and placed in the fixture of the empty fixture table B1 which, while the fixture table A1 is in the nailing station and on its way in the circulation track, is being raised to the conveyor 3 as illustrated in Figures 2-5 and then further on to the beginning of conveyor 4. The lower pieces of this first loading pallet can now be placed in the fixture of the fixture table B1 which can then be transferred to the nailing station 2 when it becomes free, i.e. when the fixture table A2 has left this station after having the upper part of a second loading pallet nailed on. As soon as the pieces for the lower part of the first loading pallet have been positioned on the fixture table B1, the upper pieces of a third pallet can be inserted in the fixture of the fixture table A1. In the meanwhile the fixture table B2 is on its way back to the feeding station. The stepwise movement of the conveyors is controlled by a control and operating means which receives a signal from a panel which can be actuated by the operators when a manual work phase is complete in the feeding station 1.

Besides greatly increased capacity (about 100%) and considerably improved working conditions for the operators, the machine according to the invention has the essential advantage that it can be used for the manufacture of a great number of different types of loading pallets by simple adjustments in the fixture tables or by replacing these by other fixture tables.

## Claims

1. A machine for manufacturing objects out of wood in two steps, preferably loading pallets and the like, comprising a feeding station (1), a nailing station (2) and a plurality of conveyors (3, 4, 5) for transporting tables (7) with fixtures supporting partially assembled loading pallets (8) as well as tables with fixtures supporting finished loading pallets (8) from the feeding station to and past the nailing station in a straight, horizontal transfer track which starts at the feeding station (1) and ends close to a delivery station for the receipt of finished loading pallets (8), **characterized in** that it further includes a return conveyor (9) for the return of empty fixture tables and fixture tables with partially assembled loading pallets to the feeding station (1), said return conveyor being disposed below said plurality of conveyors (3, 4, 5); that a vertically movable table (26) is disposed at the end of said transfer track to receive a fixture table moved along the transfer track, said vertically movable table (26) being arranged to be lowered down to the return conveyor (9) for the transfer of a fixture table with a partially assembled and nailed loading pallet or an empty fixture table to the return conveyor (9); and that a similar vertically movable table (25) is disposed at the feeding station (1) to receive a fixture table with partially assembled and nailed loading pallet or an empty fixture table and transfer the fixture table to the start of the transfer track, said plurality of conveyors (3, 4, 5), said two vertically movable tables (25, 26) and said return conveyor together forming a closed track for the simultaneous circulation of a plurality of fixture tables (7).

2. A machine as recited in claim 1, **characterized in** that said transfer track comprises three conveyors (3, 4, 5) moving independently of each other.

3. A machine as recited in claim 1 or 2, **characterized in** that the return conveyor (9) comprises two parallel, horizontal conveyor chains (24) to support opposing side portions of the fixture tables (7), said conveyor chains (24) having limited width so that an opening is formed between them, in which opening said vertically movable tables (25, 26) are disposed.

4. A machine as recited in claim 2, **characterized in** that the conveyor (4) running through the nailing station (2) has at least three feeders (15, 16, 17) evenly spaced along it, and that said conveyor (4) is sufficiently long to carry at least two fixture tables (7).

5. A machine as recited in any of the preceding claims, **characterized in** that said circulation track includes four fixture tables (7), of which every second tables (A1, A2) are intended for the upper or lower part of a loading pallet and those alternate tables (B1, B2) between said every second tables (A1, A2) are intended for the lower or upper part, respectively, after said upper or lower part has been nailed in position in the fixture table (A1, A2), returned to the feeding station (1), inverted and placed in the fixture table (B1 and B2, respectively).

Fig.1

Fig. 2

Fig. 3

Fig. 4

Fig. 5

EP 0 394 831 A2